# EUROPÄISCHE PATENTANMELDUNG

(11) **EP 4 365 466 A1**
(43) Veröffentlichungstag der Anmeldung: **08.05.2024**
(21) Anmeldenummer: 23207680.2
(22) Anmeldetag: 03.11.2023
(51) Int. Cl.: F16H 49/00

(54) **GETRIEBE MIT EINEM GETRIEBEAUSSENRING**

(30) Priorität: 03.11.2022 LU 502997
(71) Anmelder: Ovalo GmbH, 65555 Limburg (DE)
(72) Erfinder:
(74) Vertreter: Hoffmann, Jürgen

(57) **Zusammenfassung**

Die Erfindung betrifft ein Getriebe mit einem Getriebeaußenring, der einen Befestigungsabschnitt zum Befestigen des Getriebeaußenrings an einer Struktur, insbesondere an einem Getriebegehäuse, und einen Verzahnungsabschnitt aufweist. Das Getriebe zeichnet sich dadurch aus, dass der Verzahnungsabschnitt radial beweglich mit dem Befestigungsabschnitt verbunden ist.

## Beschreibung

Die Erfindung betrifft ein Getriebe mit einem Getriebeaußenring, der einen Befestigungsabschnitt zum Befestigen des Getriebeaußenrings an einer Struktur, insbesondere an einem Getriebegehäuse, und einen Verzahnungsabschnitt aufweist.

Eine Vielzahl von Getriebetypen weisen einen Getriebeaußenring mit einer Verzahnung, insbesondere einer Innenverzahnung, auf. Bei vielen Getriebeanwendungen wird der Getriebeaußenring drehfest in oder an einem Strukturbauteil, beispielsweise in einem Gehäusebauteil oder an einem Halter, befestigt, insbesondere um ein Antriebs- und/oder ein Abtriebsdrehmoment des Getriebes abzustützen, während andere Getriebebauteile relativ zu dem Gehäuse beweglich, insbesondere rotierbar, gelagert sind. Zumeist weist der Getriebeaußenring axiale Durchgangsbohrungen für Befestigungsschrauben auf, mittels denen der Getriebeaußenring beispielsweise an ein Gehäusebauteil angeschraubt werden kann. Das Strukturbauteil wird zumeist an übergeordneten Strukturen, beispielsweise an einer Fahrzeugkarosserie, an einem Roboterarmträger oder an einem Maschinengehäuse befestigt. Der Getriebeaußenring kann beispielsweise ein Circularspline oder der Dynamicspline eines Spannungswellengetriebes oder das Hohlrad eines Planetengetriebes sein.

Aus DE 10 2015 11 2 695 B3 ist ein Aktuator bekannt, der einen Antriebsmotor, ein dem Antriebsmotor triebtechnisch nachgeschaltetes Getriebe, das koaxial zum Antriebsmotor angeordnet ist, und der ein Abtriebselement aufweist. Der gesamte Aktuator kann als fertig montierte und funktionsfähige Baueinheit an ein mittels des Aktuators anzutreibendes System, das eine Antriebswelle aufweist, angekoppelt werden, wobei eine drehstarre Verbindung des Abtriebselements mit der Antriebswelle herstellbar ist, ohne hierfür Teile des Aktuators demontieren zu müssen. Bei einer Ausführungsform ist ein Getriebeaußenring, nämlich ein Dynamicspline, des als Spannungswellengetriebe ausgebildeten Getriebes drehfest in einem Aktuatorgehäuse befestigt.

Beim Einbau eines Getriebes in eine Struktur ist streng darauf zu achten, dass die Getriebebauteile korrekt zueinander ausgerichtet sind, wobei zumeist nur sehr geringe Toleranzen zugelassen sind. Beispielsweise betragen die zulässigen Toleranzen für den Exzentrizitätsfehler der den Wellengenerator antreibenden Antriebswelle eines Spannungswellengetriebes in Abhängigkeit von der Baugröße (bei größeren Baugrößen sind die Toleranzen etwas größer als bei kleineren Baugrößen) nur wenige Mikrometer, insbesondere im einstelligen oder zweistelligen Mikrometer-Bereich. Insbesondere ist es beispielsweise bei einem Spannungswellengetriebe äußerst wichtig, dass der innenverzahnte Getriebeaußenring, der Flexspline und der Wellengenerator koaxial zueinander ausgerichtet sind. Analog ist es bei einem Planetengetriebe äußerst wichtig, dass der das Hohlrad bildende Getriebeaußenring, der Planetenträger und das Sonnenrad präzise koaxial zueinander ausgerichtet sind.

Aus dem europäischen Patent EP 3 334 949 B1 ist eine Robotergelenkeinheit bekannt, bei der ein Getriebeaußenring eines Getriebes mittels eines Verbindungselementes kraftschlüssig an einer antriebsseitigen Struktur befestigt ist. Das Verbindungselement ist in einem Ringraum zwischen der antriebsseitigen Struktur und dem Getriebeaußenring angeordnet, wobei die antriebsseitige Struktur zwei Umfangsführungen aufweist, die den Getriebeaußenring beim Einpressen in die antriebsseitige Struktur radial führen und die radiale Position des Getriebeaußenrings vorgeben. In dem Europäischen Patent ist beschrieben, dass an die in der Robotik verwendeten Getriebe, wie beispielsweise Wellgetriebe, hohe Anforderungen hinsichtlich der Maßhaltigkeit gestellt sind und daher der Getriebeaußenring nicht eingepresst, sondern axial angeschraubt werden soll, um Toleranzabweichungen durch Radialkräfte zu vermeiden, die durch das Einpressen verursacht werden.

Es hat sich gezeigt, dass Getriebe eine verringerte Lebensdauer aufweisen, wenn die vorgegebenen Einbautoleranzen der Getriebebauteile nicht eingehalten werden.

Es ist daher die Aufgabe der vorliegenden Erfindung, ein Getriebe anzugeben, das insbesondere auch bei einem unpräzisen Einbau eine lange Lebensdauer aufweist.

Die Aufgabe wird durch ein Getriebe der eingangs genannten Art gelöst, das dadurch gekennzeichnet ist, dass der Verzahnungsabschnitt radial beweglich mit dem Befestigungsabschnitt verbunden ist.

In erfindungsgemäßer Weise wurde erkannt, dass der aus dem Stand der Technik bekannte Ansatz, den Getriebeaußenring beim Zusammenbau des Getriebes möglichst präzise relativ zu den übrigen Getriebebauteilen auszurichten, nicht nur besonders aufwändig ist, sondern in den üblichen Produktionsprozessen auch Umsetzbarkeitsgrenzen findet.

In erfindungsgemäßer Weise wurde weiter erkannt, dass es durch eine radiale Beweglichkeit des Verzahnungsabschnitts des Getriebeaußenrings relativ zu dem Befestigungsabschnitt im Betrieb des Getriebes eine Selbstzentrierung des Verzahnungsabschnitts erreicht wird; dies selbst dann, wenn der Getriebeaußenring nicht so präzise montiert wurde, wie es für den Zusammenbau von herkömmlichen Getrieben gefordert ist.

Es hat sich gezeigt, dass die Belastungen auf die einzelnen Getriebebauteile, beispielsweise auf den Wellengenerator eines als Spannungswellengetriebe ausgebildeten Getriebes, bei einem erfindungsgemäßen Getriebe im Vergleich zu herkömmlichen Getrieben, selbst wenn diese Positions- und Winkelabweichungen des Getriebeaußenrings innerhalb des zulässigen Toleranzbereichs aufweisen, erheblich gesenkt sind. Das erfindungsgemäße Getriebe hat daher den ganz besonderen Vorteil, dass insbesondere der Verschleiß der Lager und der ineinandergreifenden Verzahnungen reduziert sind und die Lebensdauer erhöht ist.

Darüber hinaus hat die Erfindung den ganz besonderen Vorteil, dass ein einfacher und weniger aufwändiger Einbau des Getriebes ermöglicht ist, weil auf Grund der im Betrieb des Getriebes stattfindenden Selbstzentrierung des Verzahnungsabschnitts im Vergleich zu herkömmlichen Getrieben weniger strenge Einbautoleranzen nötig sind.

Der Verzahnungsabschnitt kann insbesondere eine Innenverzahnung aufweisen. Mit einer solchen Ausführung des Getriebeaußenrings kann beispielsweise ein Spannungswellengetriebe gebildet werden, bei dem der Getriebeaußenring der innenverzahnte Circularspline oder der innenverzahnte Dynamicspline ist. Bei einer besonderen Ausführung eines Spannungswellengetriebes ist der innenverzahnte Circularspline durch einen erfindungsgemäßen Getriebeaußenring gebildet, während außerdem auch der innenverzahnte Dynamicspline durch einen weiteren erfindungsgemäßen Getriebeaußenring gebildet ist. Es ist beispielsweise auch möglich, dass ein solcher Getriebeaußenring das Hohlrad eines Planetengetriebes ist.

Bei einer ganz besonders vorteilhaften Ausführung ist der Verzahnungsabschnitt radial gegen eine Rückstellkraft, insbesondere federelastisch, beweglich mit dem Befestigungsabschnitt verbunden, insbesondere an dem Befestigungsabschnitt befestigt. Beispielsweise kann der Verzahnungsabschnitt mittels eines Zwischenbauteils an dem Befestigungsabschnitt befestigt sein, das zumindest in radialer Richtung federelastisch ausgebildet ist.

Der Getriebeaußenring kann vorteilhaft dazu ausgebildet sein, an einem Strukturbauteil befestigt zu werden, welches ein Teil einer dem Getriebe übergeordneten Struktur ist. Beispielsweise kann es sich bei der Struktur um eine Maschine handeln, an die das Getriebe angeschlossen ist, oder es kann sich um eine Maschine handeln, zu der das Getriebe gehört. Das Strukturbauteil kann insbesondere ein Gehäusebauteil sein. Bei einer besonderen Ausführung ist das Strukturbauteil ein Gehäusebauteil und Teil eines Gehäuses, das zumindest das Getriebe einhaust. Insbesondere kann vorteilhaft vorgesehen sein, dass das Gehäuse außer dem Getriebe auch einen, insbesondere elektrischen, Antriebsmotor einhaust, dem das Getriebe triebtechnisch nachgeschaltet ist.

Der Befestigungsabschnitt kann ringförmig, insbesondere als ringförmige Scheibe, oder rohrförmig ausgebildet sein. Insbesondere kann der Befestigungsabschnitt vorteilhaft derart ausgebildet sein, dass der damit gebildete Getriebeaußenring die äußere Form und/oder Größe eines herkömmlichen Getriebeaußenrings eines Getriebes gleicher Bauart und Größe aufweist.

Vorzugsweise ist der Verzahnungsabschnitt an dem Befestigungsabschnitt bezogen auf axiale Drehmomente drehfest befestigt. Auf diese Weise ist gewährleistet, dass das Antriebsdrehmoment und/oder das Abtriebsdrehmoment des Getriebes über den Getriebeaußenring an einer Struktur (beispielsweise an einem Gehäuse), an der der Befestigungsabschnitt des Getriebeaußenrings befestigt ist, abgestützt sind, so dass verhindert ist, dass der Getriebeaußenring im Betrieb des Getriebes relativ zu der Struktur rotiert.

Insbesondere um ein Abstützen der im Betrieb des Getriebes auf den Getriebeaußenring wirkenden Drehmomente an einer Struktur, an der der Getriebeaußenring befestigt ist, zu ermöglichen, ist der Getriebeaußenring bezogen auf axiale Drehmomente torsionssteif ausgebildet. Bei einer Ausführung, bei der der Verzahnungsabschnitt mittels eines Zwischenabschnitts mit dem Befestigungsabschnitt verbunden ist, kann vorteilhaft vorgesehen sein, dass der Zwischenabschnitt zwar radial verformbar, jedoch bezogen auf axiale Drehmomente torsionssteif ausgebildet ist. Allerdings ist es alternativ auch möglich, dass der Getriebeaußenring bezogen auf axiale Drehmomente elastisch ausgebildet ist, beispielsweise um Drehmomentspitzen auszugleichen.

Mit dem Begriff axiales Drehmoment ist ein Drehmoment gemeint, dessen Vektor (Kreuzprodukt aus Ortsvektor und Kraftvektor) in Axialrichtung ausgerichtet ist. Unter der Axialrichtung wird die Richtung der Achse verstanden, um die im Betrieb des Getriebes wenigstens ein Getriebebauteil rotiert. Bei einem Spannungswellengetriebe ist die Axialrichtung die Richtung entlang der sich die Rotationsachse des Wellengenerators erstreckt. Insbesondere kann das Getriebe derart ausgebildet sein, dass auf eine um eine in Axialrichtung ausgerichtete Achse rotierbare Antriebswelle ein axiales Antriebsdrehmoment ausgeübt wird und/oder dass an einer in Axialrichtung ausgerichteten Achse rotierbare Abtriebswelle das Abtriebsdrehmoment anliegt.

Der Getriebeaußenring kann insbesondere in der Weise ausgebildet sein, dass der Befestigungsabschnitt den Verzahnungsabschnitt umgibt. Hierbei kann zwischen dem Befestigungsabschnitt und dem Verzahnungsabschnitt ein, insbesondere ringförmiger, Spalt ausgebildet sein, in dem ein radial flexibler Zwischenabschnitt angeordnet ist. Der Zwischenabschnitt dient vorzugsweise dazu, den Verzahnungsabschnitt radial beweglich mit dem Befestigungsabschnitt zu verbinden.

Beispielweise kann der Zwischenabschnitt an dem Verzahnungsabschnitt und an dem Befestigungsabschnitt, insbesondere reibschlüssig und/oder stoffschlüssig und/oder formschlüssig, befestigt sein. Es ist alternativ beispielsweise auch möglich, dass der Zwischenabschnitt an dem Verzahnungsabschnitt befestigt und zusammen mit dem Befestigungsabschnitt einstückig hergestellt ist, oder dass der Zwischenabschnitt an dem Befestigungsabschnitt befestigt und zusammen mit dem Verzahnungsabschnitt einstückig hergestellt ist. Bei einer anderen Ausführung sind der Verzahnungsabschnitt und der Zwischenabschnitt und der Befestigungsabschnitt gemeinsam einstückig hergestellt. Eine einstückige Herstellung kann beispielsweise die Herstellung aus einem einzigen Stück Rohmaterial, insbesondere durch spanende Verfahren, wie Sägen, Bohren, Fräsen und/oder Drehen, umfassen. Eine einstückige Herstellung kann alternativ auch eine Herstellung durch Gießen, insbesondere Spritzgießen, oder durch additive Verfahren, wie beispielsweise 3D-Druck, umfassen.

Bei einer besonders robusten Ausführung ist der Zwischenabschnitt einstückig hergestellt. Beispielsweise kann der Zwischenabschnitt durch Guss, Spritzguss oder additive Fertigung, insbesondere aus einem elastischen Material, hergestellt sein. Alternativ kann der Zwischenabschnitt aus einem einzigen Stück Rohmaterial, beispielsweise durch spanende Herstellungsverfahren, wie Drehen, Fräsen und/oder Bohren, hergestellt sein.

Vorzugsweise ist der Zwischenabschnitt zumindest in Radialrichtung flexibel ausgebildet. Der Zwischenabschnitt ist vorzugsweise derart in radialer Richtung federelastisch ausgebildet, dass er am Ort der jeweils gerade miteinander in Zahneingriff stehenden Zähne der Verzahnungen (Beispielsweise der Innenverzahnung des Getriebeaußenrings mit der Außenverzahnung eines Flexsplines) in Radialrichtung eine geringere Radialkraft verursacht, als die Radialkraft, die dort bei unbelastetem Getriebe (kein Betrieb) ohnehin auf Grund der jeweiligen Getriebeparameter vorliegt. Hintergrund ist, dass durch die gewählten Getriebeparameter, wie Zahneingriffswinkel, Vorspannung usw., auch bei unbelastetem Getriebe (kein Betrieb) radiale Kräfte auf die Verzahnungen einwirken. Eine solche Ausführung hat den ganz besonderen Vorteil, dass die federelastische radiale Beweglichkeit des Getriebeaußenrings relativ zu dem Strukturbauteil besonders gut an das jeweilige Getriebe angepasst ist.

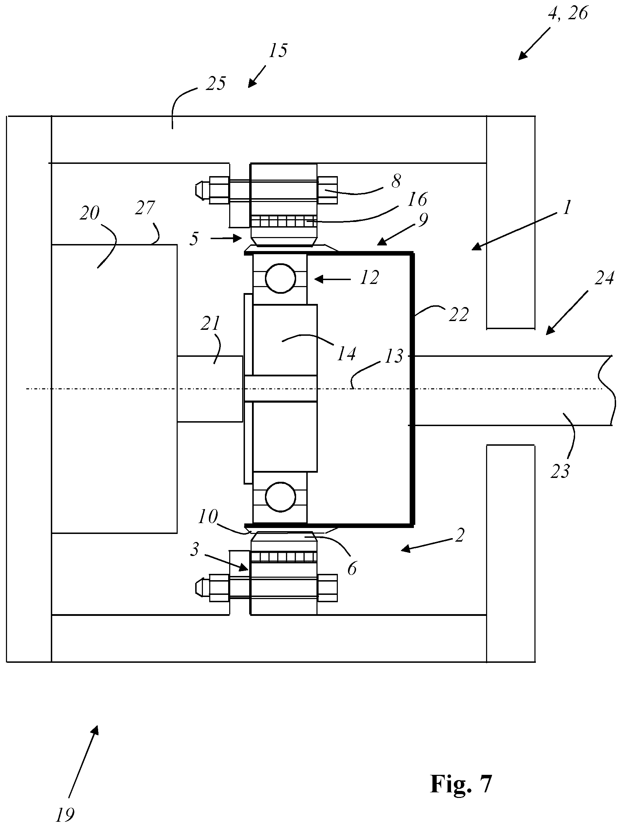

Die Radialkraft, die am Ort der jeweils gerade miteinander in Zahneingriff stehenden Zähne der Verzahnungen (Beispielsweise der Innenverzahnung des Getriebeaußenrings mit der Außenverzahnung eines Flexsplines) bei unbelastetem Getriebe (kein Betrieb) auf Grund der jeweiligen Getriebeparameter vorliegt, kann bei einem Spannungswellengetriebe beispielsweise mittels eines Mess-Wellengenerators 28 ermittelt werden, wie er in Figur 7 dargestellt ist. Ein hinsichtlich der Länge seiner Hochachse einstellbarer Mess-Wellengenerator, der einen Kraftmesssensor beinhaltet, ist nach einem eigenständigen Erfindungsgedanken besonders vorteilhaft.

Bei einer besonderen Ausführung ist der Verzahnungsabschnitt radial derart beweglich mit dem Befestigungsabschnitt verbunden, dass der Getriebeaußenring bei einer auf den Getriebeaußenring wirkenden radialen Kraft, die denselben Betrag hat, wie die am Ort der jeweils gerade miteinander in Zahneingriff stehenden Zähne der Verzahnungen (Beispielsweise der Innenverzahnung des Getriebeaußenrings mit der Außenverzahnung eines Flexsplines) bei unbelastetem Getriebe (kein Betrieb) auf Grund der jeweiligen Getriebeparameter vorliegenden Kraft, um einen radialen Weg bewegt wird, der im Bereich des 0,0001-fachen bis 0,01-fachen, insbesondere im Bereich des 0,0001-fachen bis 0,001-fachen oder im Bereich des 0,0001-fachen bis 0,0004-fachen, des Kopfkreisdurchmessers der Innenverzahnung des Getriebeaußenrings liegt.

Um eine radiale Beweglichkeit des Verzahnungsabschnitts relativ zu dem Befestigungsabschnitt zu ermöglichen, kann der Zwischenabschnitt beispielsweise aus einem Elastomermaterial hergestellt sein oder ein Elastomermaterial aufweisen.

Bei einer besonderen Ausführung weist der Zwischenabschnitt eine Wabenstruktur oder eine Gitterstruktur auf. Die Wabenstruktur bzw. Gitterstruktur ist vorzugsweise radial elastisch verformbar ausgebildet. Das Befestigungsbauteil kann alternativ oder zusätzlich elastisch verformbare Speichen aufweisen. Der Zwischenabschnitt kann beispielsweise ein radial elastisch verformbares Drahtgeflecht aufweisen.

Bei einer Ausführung des Getriebeaußenrings, die in Bezug auf axiale Drehmomente weitgehend torsionssteif ist, weist die Wabenstruktur Stege auf, die schräg zur Tangentialrichtung und schräg zur Radialrichtung verlaufen und die in Tangentialrichtung länger ausgeführt sind als in Radialrichtung. Alternativ oder zusätzlich kann die Wabenstruktur vorteilhaft in Radialrichtung verlaufende Stege aufweisen, die radial und/oder tangential versetzt zueinander angeordnet sind.

Bei einer möglichen Ausführung weist der Zwischenabschnitt eine sich radial erstreckende, wellenförmige oder zickzackförmige Wandung auf. Durch die wellenförmige oder zickzackförmige Form der Wandung kann in einfacher Weise eine radiale Elastizität erreicht werden.

Bei einer ganz besonders vorteilhaften Ausführung ist der Zwischenabschnitt aus einem anderen Material hergestellt als der Befestigungsabschnitt und/oder der Verzahnungsabschnitt. Eine solche Ausführung hat den ganz besonderen Vorteil, dass jeder Abschnitt die für seine jeweilige Funktion wichtigen Materialeigenschaften aufweisen kann.

Bei einer ganz besonders vorteilhaften Ausführung ist der Verzahnungsabschnitt aus einem anderen Material hergestellt als der Befestigungsabschnitt. Auf diese Weise kann der Verzahnungsabschnitt im Hinblick auf eine lange Lebensdauer der Verzahnung ausgelegt sein, während der Befestigungsabschnitt im Hinblick auf eine andere Eigenschaft, beispielsweise im Hinblick auf ein möglichst geringes Gewicht, ausgebildet sein kann. Beispielsweise kann der Verzahnungsabschnitt aus Stahl gebildet sein, während das Befestigungsabschnitt aus Aluminium oder einer Aluminiumlegierung gebildet ist. Es ist allerdings auch möglich, dass der Verzahnungsabschnitt aus demselben Material, beispielsweise Stahl, hergestellt ist wie der Befestigungsabschnitt. Der Befestigungsabschnitt und/oder der Verzahnungsabschnitt aus Metall oder einer Metalllegierung, insbesondere aus Stahl, hergestellt sein.

Bei einer ganz besonders vorteilhaften Ausführung ist der Zwischenabschnitt aus einem anderen Material hergestellt als der Verzahnungsabschnitt und/oder der Befestigungsabschnitt. Insbesondere kann vorteilhaft vorgesehen sein, dass der Zwischenabschnitt aufgrund der Materialauswahl und/oder der Form und/oder der Größe eine geringere Steifigkeit aufweist als der Verzahnungsabschnitt und/oder der Befestigungsabschnitt.

Um ein Anschrauben des Getriebeaußenrings an eine Struktur, beispielsweise ein Gehäusebauteil, zu ermöglichen kann der Befestigungsabschnitt vorteilhaft, insbesondere axiale, Bohrungen für Befestigungsschrauben aufweisen. Bei den Bohrungen kann es sich insbesondere um Durchgangsbohrungen und/oder Gewindebohrungen handeln. Im Hinblick auf eine gleichmäßige Kräfteverteilung sind die Bohrungen vorzugsweise in Umfangsrichtung gleichmäßig verteilt angeordnet.

Bei einer besonders kompakten und einfach handhabbaren Ausführung ist der Befestigungsabschnitt als Flansch ausgebildet.

Vorzugsweise ist der Befestigungsabschnitt relativ zu dem Verzahnungsabschnitt axial unbeweglich befestigt, während gleichzeitig die radiale Beweglichkeit des Befestigungsabschnitts relativ zu dem Verzahnungsabschnitt ermöglicht ist. Eine solche Ausführung hat insbesondere den ganz besonderen Vorteil, dass durch die radiale Beweglichkeit des Verzahnungsabschnitts relativ zu dem Befestigungsabschnitt, im Betrieb des Getriebes die bereits erwähnte Selbstzentrierung des Verzahnungsabschnitts erreicht wird, während jedoch eine axiale Verschiebung des Verzahnungsabschnitts relativ zu einem anderen Getriebebauteil, das mit dem Verzahnungsabschnitt in unmittelbarem Zahneingriff steht, beispielsweise eine axiale Verschiebung des Verzahnungsabschnitts relativ zu einem Flexspline (bei einer Ausbildung des Getriebes als Spannungswellengetriebe), vermieden ist. Auf diese Weise werden in vorteilhafter Weise insbesondere Zahneingriffsstörungen zwischen der Innenverzahnung des Verzahnungsabschnitts und der Verzahnung des anderen Getriebebauteils vermieden.

Bei einer besonderen Ausführung ist wenigstens ein Axialanschlag vorhanden, der verhindert, dass sich der Befestigungsabschnitt und der Verzahnungsabschnitt in Axialrichtung relativ zueinander bewegen. Beispielsweise kann der Befestigungsabschnitt einen Axialanschlag aufweisen, an dem der Verzahnungsabschnitt axial anliegt, wobei vorzugsweise der Verzahnungsabschnitt von dem Axialanschlag nicht an Bewegungen in Radialrichtung gehindert wird. Alternativ kann der Verzahnungsabschnitt einen Axialanschlag aufweisen, an dem der Befestigungsabschnitt axial anliegt, wobei vorzugsweise der Verzahnungsabschnitt durch den Axialanschlag nicht an Bewegungen in Radialrichtung gehindert wird.

Bei dem Getriebe kann es sich in ganz besonders vorteilhafter Weise um ein Dreiwellengetriebe handeln.

Wie bereits erwähnt, kann das Getriebe beispielsweise als Spannungswellengetriebe ausgebildet sein. Insbesondere kann vorteilhaft vorgesehen sein, dass der Getriebeaußenring ein Circularspline oder ein Dynamicspline des Spannungswellengetriebes ist.

Das Spannungswellengetriebe kann als Topfgetriebe oder als Hutgetriebe ausgebildet sein und insoweit einen topfförmigen oder hutförmigen Flexspline aufweisen. Alternativ kann das das Spannungswellengetriebe als Ringgetriebe ausgebildet sein und einen ringförmigen Flexspline aufweisen.

Wie ebenfalls bereits erwähnt, kann das Getriebe als Planetengetriebe ausgebildet sein. Alternativ sind grundsätzlich auch andere Getriebearten, die einen innenverzahnten Getriebeaußenring aufweisen, möglich.

Insbesondere kann der Getriebeaußenring als ein starres, ringförmiges und innenverzahntes Hohlrad ausgebildet sein.

Von ganz besonderem Vorteil ist eine Getriebevorrichtung, die ein erfindungsgemäßes Getriebe und eine als Gehäusebauteil ausgebildetes Strukturbauteil aufweist, an dem der Befestigungsabschnitt des Getriebeaußenrings befestigt ist. Das Gehäusebauteil kann insbesondere Teil eines Gehäuses sein, das zumindest das Getriebe einhaust.

Von ganz besonderem Vorteil ist ein Aktuator, der einen, insbesondere elektrischen, Antriebsmotor und ein erfindungsgemäßes Getriebe und/oder eine erfindungsgemäße Getriebevorrichtung aufweist. Insbesondere kann vorteilhaft vorgesehen sein, dass das Getriebe dem Antriebsmotor triebtechnisch nachgeschaltet ist. Bei einer besonderen Ausführung sind das Getriebe und der Antriebsmotor in einem gemeinsamen Gehäuse angeordnet, das das Strukturbauteil aufweist, an dem der Getriebeaußenring befestigt ist.

Ganz besonders vorteilhaft, insbesondere im Hinblick auf eine lange Lebensdauer, ist ein Robotergelenk, welches ein erfindungsgemäßes Getriebe und/oder eine erfindungsgemäße Getriebevorrichtung oder einen erfindungsgemäßen Aktuator aufweist. Aufgrund der besonderen Befestigung des Getriebeaußenrings ist eine besonders bauraumsparende Ausbildung des Robotergelenks ermöglicht.

Analog ist ein Roboter besonders vorteilhaft, der ein erfindungsgemäßes Getriebe und/oder eine erfindungsgemäße Getriebevorrichtung oder einen erfindungsgemäßen Aktuator aufweist.

Ganz besonders vorteilhaft ist, insbesondere im Hinblick auf eine lange Lebensdauer, außerdem ein Fahrwerk, insbesondere aktives Fahrwerk für ein Kraftfahrzeug, das ein erfindungsgemäßes Getriebe und/oder eine erfindungsgemäße Getriebevorrichtung oder einen erfindungsgemäßen Aktuator aufweist. Aufgrund der besonderen Befestigung des Getriebeaußenrings ist eine besonders bauraumsparende Ausbildung des Fahrwerks ermöglicht.

Ganz besonders vorteilhaft ist, insbesondere im Hinblick auf eine lange Lebensdauer, außerdem eine Lenkung, insbesondere PKW-Lenkung oder LKW-Lenkung, die ein erfindungsgemäßes Getriebe und/oder eine erfindungsgemäße Getriebevorrichtung oder einen erfindungsgemäßen Aktuator aufweist. Aufgrund der besonderen Befestigung des Getriebeaußenrings ist eine besonders bauraumsparende Ausbildung der Lenkung ermöglicht.

In der Zeichnung ist der Erfindungsgegenstand beispielhaft und ganz schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
- Fig. 1: ein Getriebe mit einem Getriebeaußenring nach dem Stand der Technik,
- Fig. 2: das Getriebe nach dem Stand der Technik, das an einem Strukturbauteil befestigt ist,
- Fig. 3: ein erstes Ausführungsbeispiel eines Getriebeaußenrings für ein erfindungsgemäßes Getriebe, in einer Draufsicht in Axialrichtung,
- Fig. 4: ein Ausführungsbeispiel eines erfindungsgemäßen Getriebes mit dem ersten Ausführungsbeispiel eines Getriebeaußenrings,
- Fig. 5: ein zweites Ausführungsbeispiel eines Getriebeaußenrings für ein erfindungsgemäßes Getriebe, in einer Draufsicht in Axialrichtung,
- Fig. 6: ein drittes Ausführungsbeispiel eines Getriebeaußenrings für ein erfindungsgemäßes Getriebe, in einer Draufsicht in Axialrichtung,
- Fig. 7: ein Ausführungsbeispiel eines erfindungsgemäßen Aktuators, und
- Fig. 8: ein Ausführungsbeispiel eines erfindungsgemäßen Aktuators, bei dem der Wellengenerator für eine Kraftmessung durch einen Mess-Wellengenerator ersetzt ist.

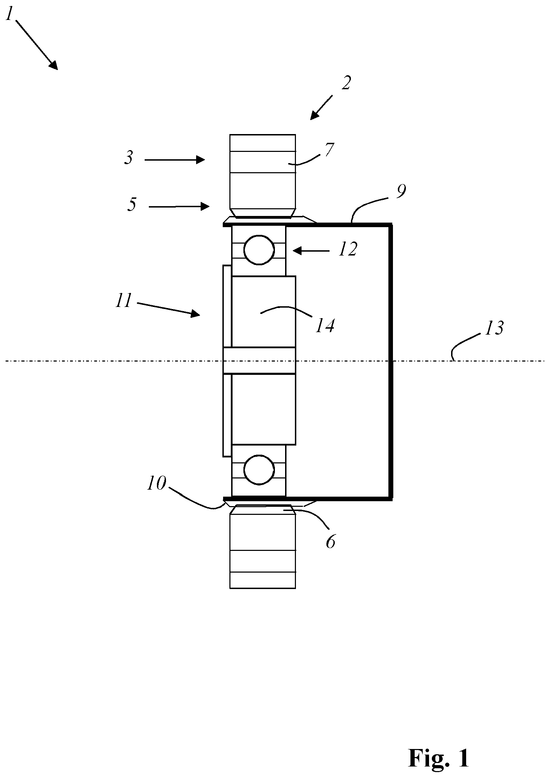

Figur 1 zeigt ein als Spannungswellengetriebe ausgebildetes Getriebe 1 nach dem Stand der Technik, das einen starren und ringförmigen Getriebeaußenring 2 mit einem Befestigungsabschnitt 3 zum Befestigen des Getriebeaußenrings 2 an einer (in dieser Figur nicht dargestellten) Struktur 4 und mit einem einen Verzahnungsabschnitt 5 aufweist. Der Getriebeaußenring 2 bildet den Circularspline des Spannungswellengetriebes.

Der Verzahnungsabschnitt 5 weist eine Innenverzahnung 6 auf.

Der Befestigungsabschnitt 3 des Getriebeaußenrings 2 hat mehrere axiale Durchgangsbohrungen 7 für (in dieser Figur nicht dargestellte) Befestigungsschrauben 8, mittels denen der Getriebeaußenring 2 in und/oder an einer Struktur 4, die beispielsweise ein Gehäuse oder ein Träger sein kann, angeschraubt werden kann.

Das Spannungswellengetriebe weist außerdem einen topfförmigen Flexspline 9 auf. Der Flexspline 9 weist an seinem freien Ende eine Außenverzahnung 10 auf. In dem außenverzahnten Flexspline 9 ist ein elliptischer Wellengenerator 11 angeordnet. Der Wellengenerator 11 weist ein radialflexibles Wälzlager 12 und einen (in einer zur Rotationsmittelachse 13 senkrechten Ebene) elliptischen Verformungskörper 14 auf.

Der Wellengenerator 11 formt den Flexspline 9 zu einer elliptischen Form, um die Außenverzahnung 10 des Flexsplines 9 an jedem Ende der Ellipsen-Hauptachse, also an zwei bezogen auf die Rotationsmittelachse 13 des Spannungswellengetriebes 1 achsensymmetrisch gegenüberliegenden Stellen, mit der Innenverzahnung 6 des Getriebeaußenrings 5 in Eingriff zu bringen.

Der Verformungskörper 14 ist mittels des Wälzlagers 12 rotierbar gelagert.

Wenn der Verformungskörper 14 rotiert wird, gelangen Zähne der Außenverzahnung 10 an gegenüberliegenden Stellen umlaufend in und außer Eingriff mit den Zähnen der Innenverzahnung 6, wobei sich Zähne der Außenverzahnung 10 fortlaufend radial um eine Strecke bewegen, die etwas größer als ihre Zahnhöhe ist. Die Rotation des Verformungskörpers 14 verursacht eine untersetzte Rotation des Flexsplines 9. Beispielsweise kann der Verformungskörper 14 als Getriebeantrieb fungieren, während der Flexspline 9 als Getriebeabtrieb fungiert. Hierzu kann der Verformungskörper 14 einem (nicht dargestellten), insbesondere elektrischen, Antriebsmotor 20 triebtechnisch nachgeschaltet sein.

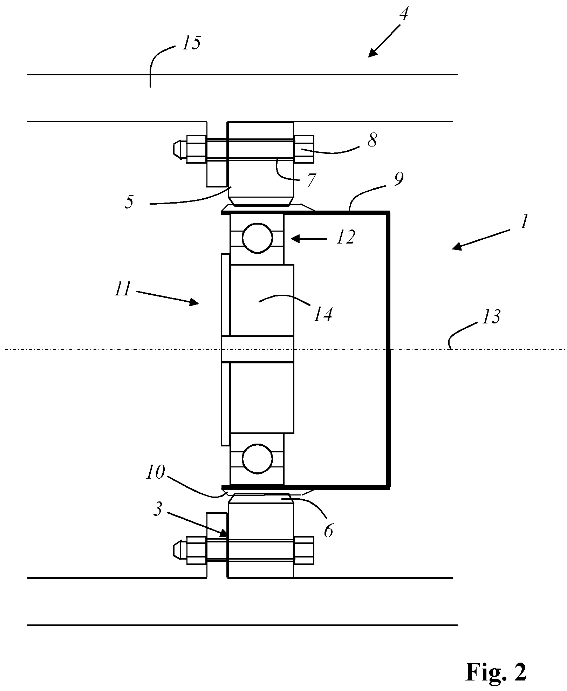

Figur 2 zeigt das Getriebe 1 nach dem Stand der Technik, das an einem Strukturbauteil 15 einer Struktur 4 befestigt ist. Der Getriebeaußenring 5 ist mittels mehrerer Befestigungsschrauben 8, die durch die axialen Durchgangsbohrungen 7 verlaufen, in dem Strukturbauteil 15 angeschraubt. Das Strukturbauteil 15 kann beispielsweise als ein Gehäusebauteil 25 Bestandteil eines Gehäuses 26 sein, das zumindest das Getriebe 1 einhaust.

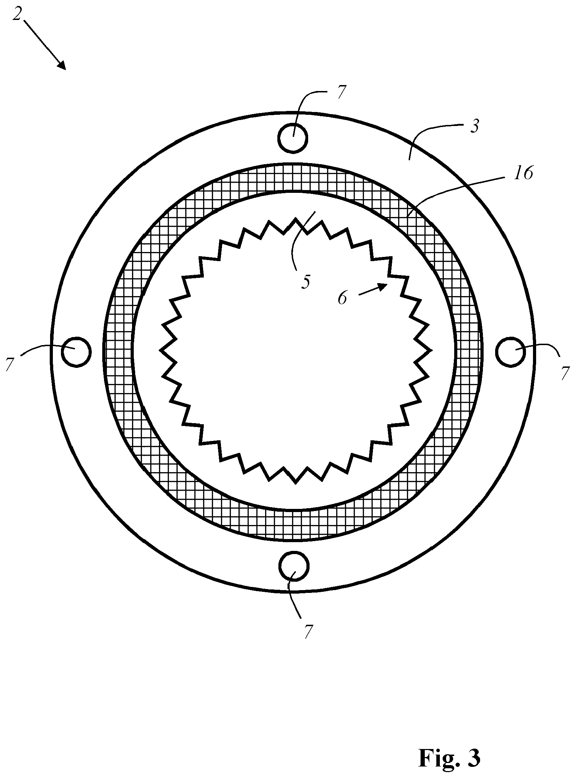

Figur 3 zeigt ein erstes Ausführungsbeispiel eines Getriebeaußenrings 2 für ein erfindungsgemäßes Getriebe, in einer Draufsicht in Axialrichtung.

Der Verzahnungsabschnitt 5 des Getriebeaußenrings 2 weist eine Innenverzahnung 6 auf.

Der Befestigungsabschnitt 3 des Getriebeaußenrings 2 hat mehrere axiale Durchgangsbohrungen 7 für (in dieser Figur nicht dargestellte) Befestigungsschrauben 8, mittels denen der Getriebeaußenring 2 in und/oder an einer Struktur 4 angeschraubt werden kann.

Der Getriebeaußenring 2 ist in der Weise ausgebildet sein, dass der Befestigungsabschnitt 3 den Verzahnungsabschnitt 5 umgibt. Zwischen dem Befestigungsabschnitt 3 und dem Verzahnungsabschnitt 5 ist ein ringförmiger Spalt ausgebildet, in dem ein radial flexibler Zwischenabschnitt 16 angeordnet ist. Der Zwischenabschnitt 16 verbindet den Verzahnungsabschnitt 5 radial beweglich mit dem Befestigungsabschnitt 3. Der Zwischenabschnitt 16 weist eine Wabenstruktur auf und ist radial elastisch verformbar ausgebildet.

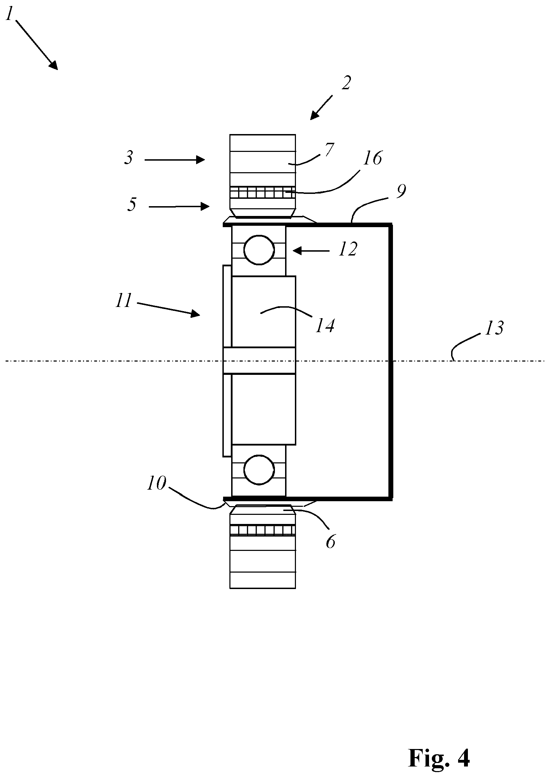

Figur 4 zeigt ein Ausführungsbeispiel eines erfindungsgemäßen Getriebes 1 mit dem ersten Ausführungsbeispiel eines Getriebeaußenrings 2. Das Getriebe 1 ist als Spannungswellengetriebe ausgebildet und abgesehen von dem Getriebeaußenring 2 genauso aufgebaut, wie das in den Figuren 1 und 2 dargestellte Spannungswellengetriebe.

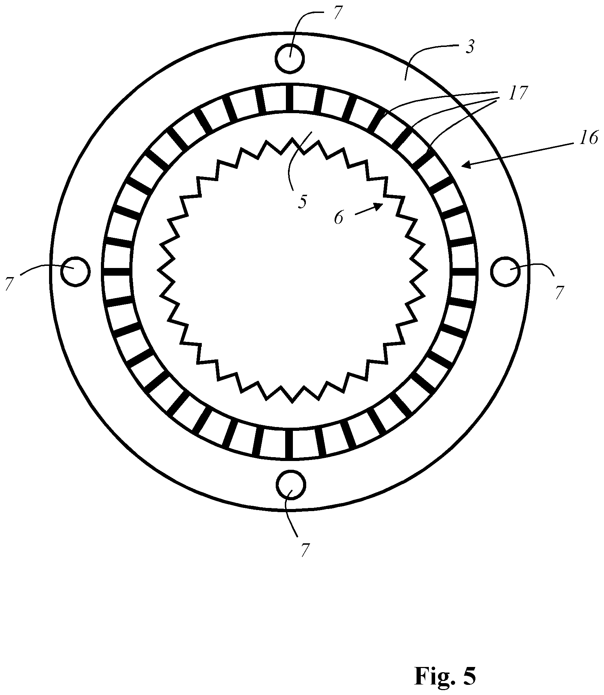

Figur 5 zeigt ein zweites Ausführungsbeispiel eines Getriebeaußenrings 2 für ein erfindungsgemäßes Getriebe, in einer Draufsicht in Axialrichtung.

Der Verzahnungsabschnitt 5 des Getriebeaußenrings 2 weist eine Innenverzahnung 6 auf.

Der Befestigungsabschnitt 3 des Getriebeaußenrings 2 hat mehrere axiale Durchgangsbohrungen 7 für (in dieser Figur nicht dargestellte) Befestigungsschrauben 8, mittels denen der Getriebeaußenring 2 in und/oder an einer Struktur 4 angeschraubt werden kann.

Der Getriebeaußenring 2 ist in der Weise ausgebildet sein, dass der Befestigungsabschnitt 3 den Verzahnungsabschnitt 5 umgibt. Zwischen dem Befestigungsabschnitt 3 und dem Verzahnungsabschnitt 5 ist ein ringförmiger Spalt ausgebildet, in dem ein radial flexibler Zwischenabschnitt 16 angeordnet ist. Der Zwischenabschnitt 16 verbindet den Verzahnungsabschnitt 5 radial beweglich mit dem Befestigungsabschnitt 3. Der Zwischenabschnitt 16 weist radial verlaufende und elastisch verformbare Speichen 17 auf.

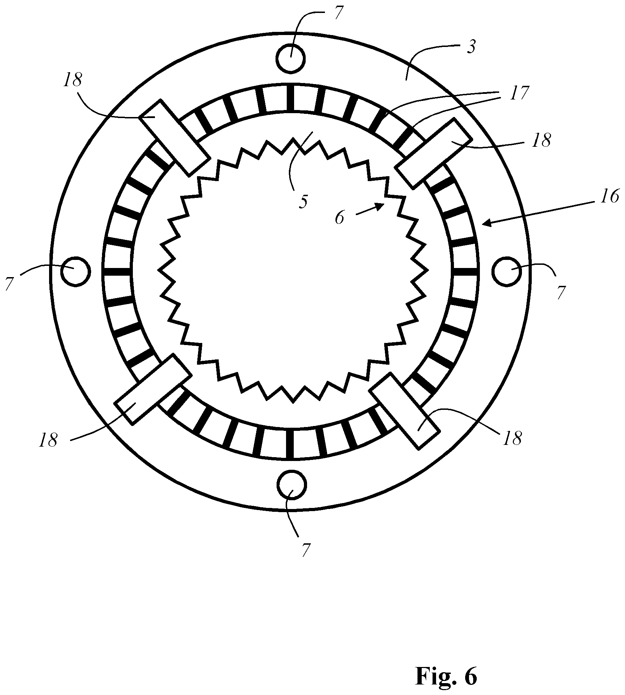

Figur 6 zeigt ein drittes Ausführungsbeispiel eines Getriebeaußenrings 2 für ein erfindungsgemäßes Getriebe 1, in einer Draufsicht in Axialrichtung.

Der Getriebeaußenring 2 entspricht dem in Figur 5 dargestellten zweiten Ausführungsbeispiel eines Getriebeaußenrings 2. Allerdings sind mehrere Axialanschläge 18 vorhanden, die verhindern, dass sich der Befestigungsabschnitt 3 und der Verzahnungsabschnitt 5 in Axialrichtung relativ zueinander bewegen. Konkret sind die Axialanschläge 18 an dem Befestigungsabschnitt 3 starr befestigt, während sie an dem Verzahnungsabschnitt 5 axial lediglich anliegen, wobei der Verzahnungsabschnitt 5 von den Axialanschlägen 18 nicht an Bewegungen in Radialrichtung gehindert wird.

Figur 7 zeigt ein Ausführungsbeispiel eines erfindungsgemäßen Aktuators 19, der ein erfindungsgemäßes Getriebe 1 gemäß dem in den Figuren 3 und 4 dargestellten Ausführungsbeispiel sowie einen, vorzugsweise elektrischen, Antriebsmotor 20 beinhaltet.

Das Strukturbauteil 15, an dem der Befestigungsabschnitt 3 des Getriebeaußenrings 2 angeschraubt ist, ist ein Gehäusebauteil 25 und Bestandteil einer Struktur 4, die als Gehäuse 26 ausgebildet ist. Das Gehäuse 26 haust das Getriebe 1 und den Antriebsmotor 20 ein. Ein Motorgehäuse 27 des Antriebsmotors 20 ist an der Innenseite des Gehäuses 26 drehfest befestigt.

Das Getriebe 1 ist dem Antriebsmotor 20 triebtechnisch nachgeschaltet. Hierzu ist eine Abtriebswelle 21 des Antriebsmotors 20 drehmomentübertragend und mit dem Verformungskörper 14 verbunden.

An dem Boden 22 des topfförmigen Flexsplines 9 ist eine Abtriebswelle 23 drehfest angekoppelt, die durch eine Öffnung 24 des Gehäuses 26 ragt.

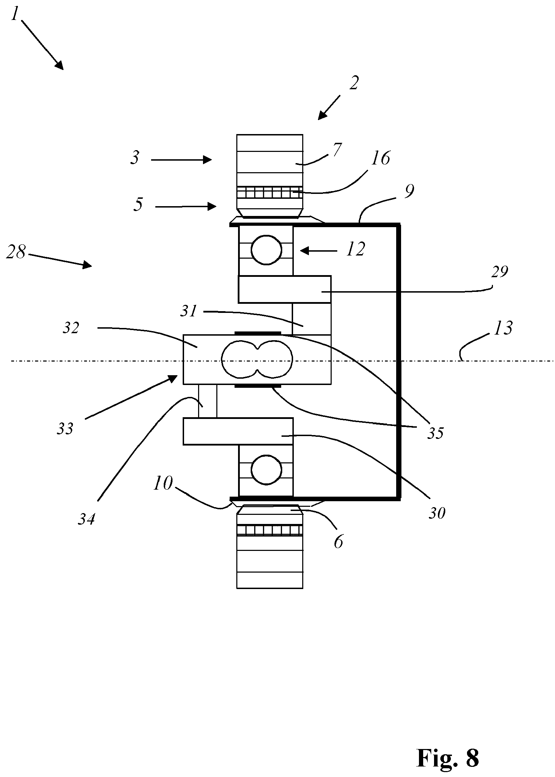

Figur 8 zeigt ein Ausführungsbeispiel eines erfindungsgemäßen Aktuators, welches im Wesentlichen dem Ausführungsbeispiel gemäß Figur 4 entspricht, wobei jedoch der Wellengenerator 11 für eine Kraftmessung durch einen Mess-Wellengenerator 28 ersetzt ist. Der Mess-Wellengenerator 28 weist ein erstes Ovalsegment 29 und ein zweites Ovalsegment 30 auf. Das erste Ovalsegment 29 stützt sich über ein starres Stützteil 31 an einem Ende eines Verformungskörpers 32 eines Kraftmesssensors 33 ab. Der Verformungskörper 32 kann nach dem Doppelbiegebalkenprinzip aufgebaut sein, wobei jedoch auch andere Ausführungen möglich sind. Das zweite Ovalsegment 30 stützt sich über einen Linearversteller 34 an dem anderen Ende des Verformungskörpers 32 des Kraftmesssensors 33 ab. Auf den Verformungskörper 32 sind Dehnungsmessstreifen 35 aufgeklebt. Mittels des Linearverstellers 34 kann der radiale Abstand der Ovalsegmente 29, 30 verändert werden. Mittels des Kraftmesssensors 33 kann die in Radialrichtung auf den Mess-Wellengenerator 28 wirkende Kraft gemessen werden. Insbesondere kann die Radialkraft gemessen werden, die am Ort der jeweils gerade miteinander in Zahneingriff stehenden Zähne der Verzahnungen (Beispielsweise der Innenverzahnung des Getriebeaußenrings mit der Außenverzahnung eines Flexsplines) bei unbelastetem Getriebe (kein Betrieb) auf Grund der jeweiligen Getriebeparameter vorliegt. Hierzu wird der Mess-Wellengenerator 28 mittels des Linearverstellers 34 so eingestellt, dass der Abstand der Außenflächen des ersten Ovalsegments 29 und des zweiten Ovalsegments 30 der Länge der Hochachse des für den Betrieb vorgesehenen Wellengenerators 11 entspricht.

### Bezugszeichenliste:

- 1: Getriebe
- 2: Getriebeaußenring
- 3: Befestigungsabschnitt
- 4: Struktur
- 5: Verzahnungsabschnitt
- 6: Innenverzahnung
- 7: Durchgangsbohrung
- 8: Befestigungsschraube
- 9: Flexspline
- 10: Außenverzahnung
- 11: Wellengenerator
- 12: radial flexibles Wälzlager
- 13: Rotationsmittelachse
- 14: Verformungskörper
- 15: Strukturbauteil
- 16: Zwischenabschnitt
- 17: Speichen
- 18: Axialanschlag
- 19: Aktuator
- 20: Antriebsmotor
- 21: Antriebswelle
- 22: Boden
- 23: Abtriebswelle
- 24: Öffnung
- 25: Gehäusebauteil
- 26: Gehäuse
- 27: Motorgehäuse
- 28: Mess-Wellengenerator
- 29: erstes Ovalsegment
- 30: zweites Ovalsegment
- 31: Stützteil
- 32: Verformungskörper
- 33: Kraftmesssensor
- 34: Linearversteller
- 35: Dehnungsmessstreifen

## Patentansprüche

1. Getriebe (1) mit einem Getriebeaußenring (2), der einen Befestigungsabschnitt (3) zum Befestigen des Getriebeaußenrings (2) an einer Struktur (4), insbesondere an einem Getriebegehäuse, und einen Verzahnungsabschnitt (5) aufweist, **dadurch gekennzeichnet, dass** der Verzahnungsabschnitt (5) radial beweglich mit dem Befestigungsabschnitt (3) verbunden ist.

2. Getriebe (1) nach Anspruch 1, **dadurch gekennzeichnet, dass** das Getriebe (1) wenigstens eines der nachfolgenden Merkmale a bis g aufweist:
a. der Verzahnungsabschnitt (5) weist eine Innenverzahnung (6) auf,
b. der Verzahnungsabschnitt (5) ist radial gegen eine Rückstellkraft, insbesondere federelastisch, beweglich mit dem Befestigungsabschnitt (3) verbunden,
c. der Verzahnungsabschnitt (5) ist ringförmig oder rohrförmig ausgebildet,
d. der Befestigungsabschnitt (3) ist ringförmig, insbesondere als ringförmige Scheibe, oder rohrförmig ausgebildet,
e. der Verzahnungsabschnitt (5) ist bezogen auf axiale Drehmomente drehfest mit dem Befestigungsabschnitt (3) verbunden,
f. der Getriebeaußenring (2) ist, insbesondere bezogen auf axiale Drehmomente, torsionssteif ausgebildet,
g. der Befestigungsabschnitt (3) umgibt den Verzahnungsabschnitt (5).

3. Getriebe (1) nach Anspruch 1 oder 2, **dadurch gekennzeichnet, dass** zwischen dem Verzahnungsabschnitt (5) und dem Befestigungsabschnitt (3), insbesondere in einem ringförmigen Spalt zwischen dem Verzahnungsabschnitt (5) und dem Befestigungsabschnitt (3), ein radial flexibler Zwischenabschnitt (16) angeordnet ist.

4. Getriebe (1) nach Anspruch 3, **dadurch gekennzeichnet, dass**
a. der Verzahnungsabschnitt (5) an dem Zwischenabschnitt (16) befestigt ist, oder dass
b. der Befestigungsabschnitt (3) an dem Zwischenabschnitt (16) befestigt ist, oder dass
c. der Verzahnungsabschnitt (5) und der Befestigungsabschnitt (3) an dem Zwischenabschnitt (16) befestigt sind.

5. Getriebe (1) nach Anspruch 3, **dadurch gekennzeichnet, dass**
a. der Verzahnungsabschnitt (5) und der Zwischenabschnitt (16) gemeinsam einstückig hergestellt sind, oder dass
b. der Befestigungsabschnitt (3) und der Zwischenabschnitt (16) gemeinsam einstückig hergestellt sind, oder dass
c. der Verzahnungsabschnitt (5) und der Zwischenabschnitt (16) und der Befestigungsabschnitt (3) gemeinsam einstückig hergestellt sind.

6. Getriebe (1) nach einem der Ansprüche 3 bis 5, **dadurch gekennzeichnet, dass** das Getriebe (1) wenigstens eines der nachfolgenden Merkmale a bis I aufweist:
a. der Zwischenabschnitt (16) ist in Radialrichtung flexibel ausgebildet,
b. der Zwischenabschnitt (16) ist bezogen auf axiale Drehmomente torsionssteif ausgebildet,
c. der Zwischenabschnitt (16) ist aus einem Elastomermaterial hergestellt oder weist ein Elastomermaterial auf,
d. der Zwischenabschnitt (16) weist ein Drahtgeflecht auf,
e. der Zwischenabschnitt (16) weist eine sich in Radialrichtung erstreckende, wellenförmige oder zickzackförmige Wandung auf,
f. der Zwischenabschnitt (16) weist eine Wabenstruktur oder eine Gitterstruktur auf,
g. der Zwischenabschnitt (16) weist eine Wabenstruktur auf, die Stege aufweist, die schräg zur Tangentialrichtung und schräg zur Radialrichtung verlaufen und die in Tangentialrichtung länger ausgeführt sind als in Radialrichtung,
h. der Zwischenabschnitt (16) weist eine Wabenstruktur auf, die in Radialrichtung verlaufende Stege aufweist, die radial und/oder tangential versetzt zueinander angeordnet sind,
i. der Zwischenabschnitt (16) weist eine geringere Steifigkeit auf als der Verzahnungsabschnitt (5),
j. der Zwischenabschnitt (16) ist durch Guss, Spritzguss oder additive Fertigung hergestellt,
k. der Zwischenabschnitt (16) ist aus einem einzigen Stück Rohmaterial hergestellt,
l. der Zwischenabschnitt (16) ist aus einem anderen Material hergestellt als der Befestigungsabschnitt (3) und/oder der Verzahnungsabschnitt (5).

7. Getriebe (1) nach einem der Ansprüche 1 bis 6, **dadurch gekennzeichnet, dass**
a. der Befestigungsabschnitt (3) und/oder der Verzahnungsabschnitt (5) aus Metall oder einer Metalllegierung, insbesondere aus Stahl, hergestellt sind, und/oder dass
b. der Befestigungsabschnitt (3) und/oder der Verzahnungsabschnitt (5) aus unterschiedlichen Materialen hergestellt sind.

8. Getriebe (1) nach einem der Ansprüche 1 bis 7, **dadurch gekennzeichnet, dass**
a. der Befestigungsabschnitt (3), insbesondere axiale und/oder in Umfangsrichtung gleichmäßig verteilte, Bohrungen für Befestigungsschrauben aufweist, und/oder dass
b. der Befestigungsabschnitt (3) als Flansch ausgebildet ist.

9. Getriebe (1) nach einem der Ansprüche 1 bis 8, **dadurch gekennzeichnet, dass**
a. der Befestigungsabschnitt (3) einen Axialanschlag aufweist, an dem der Verzahnungsabschnitt (5) axial anliegt, oder dass
b. der Verzahnungsabschnitt (5) einen Axialanschlag aufweist, an dem der Befestigungsabschnitt (3) axial anliegt.

10. Getriebe (1) nach einem der Ansprüche 1 bis 9, **dadurch gekennzeichnet, dass** das Getriebe (1) ein Dreiwellengetriebe ist und/oder dass das Getriebe (1) als Planetengetriebe ausgebildet ist.

11. Getriebe (1) nach einem der Ansprüche 1 bis 10, **dadurch gekennzeichnet, dass** das Getriebe (1) wenigstens eines der nachfolgenden Merkmale a bis d aufweist:
a. das Getriebe (1) ist als Spannungswellengetriebe ausgebildet,
b. das Getriebe (1) ist als Spannungswellengetriebe ausgebildet und der Getriebeaußenring (2) ist ein Circularspline oder ein Dynamicspline des Spannungswellengetriebes,
c. das Getriebe (1) ist als Spannungswellengetriebe ausgebildet und weist einen topfförmigen oder hutförmigen Flexspline (9) auf,
d. das Getriebe (1) ist als Spannungswellengetriebe in Form eines Ringgetriebes ausgebildet.

12. Getriebevorrichtung, die ein Getriebe (1) nach einem der Ansprüche 1 bis 11 und ein als Gehäusebauteil ausgebildetes Strukturbauteil aufweist, an dem der Befestigungsabschnitt (3) des Getriebeaußenrings befestigt ist, wobei das Gehäusebauteil Teil eines Gehäuses sein kann, das zumindest das Getriebe (1) einhaust.

13. Aktuator (19), der
a. einen, insbesondere elektrischen, Antriebsmotor (20) und
b. ein, vorzugsweise dem Antriebsmotor treibtechnisch nachgeschaltetes, Getriebe (1) nach einem der Ansprüche 1 bis 11 oder eine Getriebevorrichtung nach Anspruch 12 aufweist.

14. Robotergelenk, das ein Getriebe (1) nach einem der Ansprüche 1 bis 11 oder eine Getriebevorrichtung nach Anspruch 12 oder einen Aktuator (19) nach Anspruch 13 aufweist, oder Roboter, der ein Getriebe (1) nach einem der Ansprüche 1 bis 11 oder eine Getriebevorrichtung nach Anspruch 12 oder einen Aktuator (19) nach Anspruch 13 aufweist.

15. Fahrzeugbaugruppe, insbesondere Fahrwerk, insbesondere aktives Fahrwerk für ein Kraftfahrzeug, oder Lenkung, insbesondere PKW-Lenkung oder LKW-Lenkung, die ein Getriebe (1) nach einem der Ansprüche 1 bis 11 oder eine Getriebevorrichtung nach Anspruch 12 oder einen Aktuator (19) nach Anspruch 13 aufweist.
